# EUROPÄISCHE PATENTSCHRIFT

(11) **EP 4 147 423 B1**
(45) Veröffentlichungstag und Bekanntmachung des Hinweises auf die Patenterteilung: **13.03.2024**
(21) Anmeldenummer: 21759261.7
(22) Anmeldetag: 04.08.2021
(51) Int. Cl.: H04L 12/40, H04L 12/403, G06F 11/30

(54) **DATENÜBERTRAGUNG AN EINEM BUSSYSTEM**
DATA TRANSMISSION ON A BUS SYSTEM
TRANSFERT DE DONNÉES SUR UN SYSTÈME BUS

(30) Priorität: 19.08.2020 EP 20191723
(43) Veröffentlichungstag der Anmeldung: 15.03.2023
(73) Patentinhaber: Siemens Aktiengesellschaft, 80333 München (DE)
(72) Erfinder: VARGAS BARROSO, Aharón Jesus, 91074 Herzogenaurach (DE); WAGNER, Christian, 90411 Nürnberg (DE)
(74) Vertreter: Siemens Patent Attorneys
(86) Internationale Anmeldenummer: PCT/EP2021/071769
(87) Internationale Veröffentlichungsnummer: WO 2022/037944

(56) Entgegenhaltungen:
- DE-A1- 19 831 405
- US-A- 3 866 175
- US-A1- 2016 378 153

## Beschreibung

Die Erfindung betrifft ein Datenübertragungssystem mit einem Bussystem und ein Verfahren zur Datenübertragung mit einem derartigen Datenübertragungssystem.

In einem Datenübertragungssystem mit einem Bussystem kommunizieren Teilnehmer des Datenübertragungssystems miteinander über das Bussystem, wobei das Bussystem Daten zwischen den Teilnehmern überträgt. Dabei wird unterschieden zwischen Teilnehmern, die selbständig eine Kommunikation über das Bussystem initiieren dürfen, und Teilnehmern, die nur auf Anfragen antworten dürfen. Teilnehmer, die selbständig eine Kommunikation über das Bussystem initiieren dürfen, werden im Folgenden als Mastereinheiten bezeichnet. Teilnehmer, die nur auf Anfragen antworten dürfen, werden im Folgenden als Slaveeinheiten bezeichnet.

Solche Datenübertragungssysteme sind aus dem Stand der Technik bekannt, siehe z.B. die US-Patentanmeldung US 2016/378153 A1.

Die Datenübertragung in einem derartigen Datenübertragungssystem wird in der Regel von Software gesteuert. Häufig benötigt eine Mastereinheit Daten, die von einer Slaveeinheit bereitgestellt werden, um eine bestimmte Aufgabe auszuführen. Beispielsweise weist die Slaveeinheit einen Sensor auf, der Daten erfasst, die von der Mastereinheit verarbeitet werden. Oft ist die von der Mastereinheit auszuführende Aufgabe zeitkritisch, das heißt die Aufgabe muss möglichst umgehend ausgeführt werden, sobald die Slaveeinheit die erforderlichen Daten bereitstellt. Um dieser Anforderung zu genügen, wird durch die zur Datenübertragung verwendete Software in der Regel ein so genanntes Polling und/oder eine so genannte Unterbrechungsanforderungssteuerung (engl. Interrupt Handling) implementiert.

Bei dem Polling fragt eine Mastereinheit zyklisch durch über das Bussystem gesendete Pollingnachrichten den Slavezustand einer Slaveeinheit ab, um zu erfahren, wann die Slaveeinheit die von der Mastereinheit benötigten Daten bereitstellt.

Bei der Unterbrechungsanforderungssteuerung sendet die Slaveeinheit eine so genannte Unterbrechungsanforderung an die Mastereinheit, sobald sie die von der Mastereinheit benötigten Daten bereitstellt. Die Mastereinheit unterbricht nach dem Empfang der Unterbrechungsanforderung die Ausführung anderer Programme, um das die Daten der Slaveeinheit verwendende Programm auszuführen.

Sowohl das Polling als auch die Unterbrechungsanforderungssteuerung haben jedoch Nachteile bei der Datenübertragung an einem Bussystem. Bei dem Polling greift die Mastereinheit wiederholt und in kurzen Zeitabständen auf das Bussystem zu, um Pollingnachrichten an eine Slaveeinheit zu versenden. Dadurch blockiert sie sehr oft für andere Mastereinheiten den Zugriff auf diese Slaveeinheit über das Bussystem und gegebenenfalls auch den Zugriff auf weitere Slaveeinheiten, die mit dem Bussystem über eine mit dieser Slaveeinheit gemeinsame Verbindung verbunden sind. Eine Unterbrechungsanforderung greift wesentlich in die Programmausführung der Mastereinheit ein, da sie eine Unterbrechung des aktuell ausgeführten Programms und eine Verschiebung der Ausführung anderer Programme erfordert und ein nicht deterministisches Verhalten der Mastereinheit bedeuten kann, da der Zeitpunkt der Unterbrechungsanforderung nicht bestimmt ist.

Der Erfindung liegt die Aufgabe zugrunde, eine Datenübertragung an einem Bussystem anzugeben, die hinsichtlich der Kommunikation zwischen einer Mastereinheit und einer Slaveeinheit verbessert ist.

Die Aufgabe wird erfindungsgemäß durch ein Datenübertragungssystem mit den Merkmalen des Anspruchs 1 und ein Verfahren zur Datenübertragung mit den Merkmalen des Anspruchs 10 gelöst.

Vorteilhafte Ausgestaltungen der Erfindung sind Gegenstand der Unteransprüche.

Ein erfindungsgemäßes Datenübertragungssystem umfasst
- ein Bussystem,
- eine Mastereinheit, die zum Versenden von Nachrichten eingerichtet ist,
- wenigstens eine der Mastereinheit zugeordnete und mit dem Bussystem verbundene Slaveeinheit (vorzugsweise mehrere beispielsweise unterschiedliche Slaveeinheiten), die eingerichtet ist, über eine Unterbrechungsanforderungsleitung an die Mastereinheit gerichtete Unterbrechungsanforderungen zu versenden,
- eine als Hardwarekomponente ausgebildete Monitoreinheit, die zwischen die Mastereinheit und das Bussystem geschaltet ist, mit der Unterbrechungsanforderungsleitung jeder der Mastereinheit zugeordneten Slaveeinheit verbunden ist und eingerichtet ist,
- die von der Mastereinheit gesendeten Nachrichten und die von jeder der Mastereinheit zugeordneten Slaveeinheit über eine Unterbrechungsanforderungsleitung gesendeten Unterbrechungsanforderungen zu empfangen, und
- Pollingnachrichten, die von der Mastereinheit an eine ihr zugeordnete Slaveeinheit gerichtet sind, nicht an das Bussystem weiterzuleiten und das periodische Versenden von Pollingnachrichten der Mastereinheit an die wenigstens eine der Mastereinheit zugeordnete Slaveeinheit über das Bussystem zu unterbinden, bis die Slaveeinheit eine Unterbrechungsanforderung über die Unterbrechungsanforderungsleitung sendet.

Ein erfindungsgemäßes Datenübertragungssystem unterscheidet sich von einem dazu korrespondierenden herkömmlichen Datenübertragungssystem dadurch, dass es für (wenigstens) eine Mastereinheit eine Monitoreinheit aufweist, die das periodische Versenden von Pollingnachrichten der Mastereinheit an eine zugeordnete Slaveeinheit über das Bussystem unterbindet, bis die Slaveeinheit eine an die Mastereinheit gerichtete Unterbrechungsanforderung über eine Unterbrechungsanforderungsleitung sendet. Bei einem korrespondierenden herkömmlichen Datenübertragungssystem ist die Mastereinheit dagegen direkt mit dem Bussystem verbunden und die Unterbrechungsanforderungsleitung ist mit der Mastereinheit verbunden. Von der Mastereinheit an eine ihr zugeordnete Slaveeinheit gerichtete Pollingnachrichten werden in dem herkömmlichen Datenübertragungssystem daher periodisch über das Bussystem an diese Slaveeinheit geleitet und blockieren dadurch das Bussystem für andere Mastereinheiten, die auf diese Slaveeinheit oder auf weitere Slaveeinheiten, die über eine mit dieser Slaveeinheit gemeinsame Verbindung mit dem Bussystem verbunden sind, zugreifen wollen.

Durch die Monitoreinheit wird also erreicht, dass das Bussystem nicht durch an eine Slaveeinheit gerichtete periodische Pollingnachrichten der Mastereinheit belastet wird, solange die Slaveeinheit keine an die Mastereinheit gerichtete Unterbrechungsanforderung sendet. Die Verwendung der Monitoreinheit erfordert keine Anpassung der von der Mastereinheit und den Slaveeinheiten ausgeführten Software, da von der Mastereinheit das Polling und von den Slaveeinheiten das Versenden von Unterbrechungsanforderungen unverändert durchgeführt werden. Mit anderen Worten ist die Monitoreinheit eine für die Software transparente Hardwarekomponente und kann daher problemlos und vorteilhaft in ein herkömmliches Datenübertragungssystem integriert werden, um dieses zu einem erfindungsgemäßen Datenübertragungssystem umzurüsten.

Bei einer Ausgestaltung des erfindungsgemäßen Datenübertragungssystems ist in der Monitoreinheit für jede der Mastereinheit zugeordnete Slaveeinheit ein der Slaveeinheit zugeordneter Adressbereich hinterlegt. Insbesondere kann die Monitoreinheit eingerichtet sein, anhand einer in einer Pollingnachricht enthaltenen Adresse zu erkennen, ob die Pollingnachricht an eine der Mastereinheit zugeordnete Slaveeinheit gerichtet ist. Unter einem Adressbereich einer Slaveeinheit wird hier eine Menge von Adressen, beispielsweise Geräte- oder Netzwerkadressen, verstanden, die der Slaveeinheit in dem Datenübertragungssystem eindeutig zugeordnet sind. Den unterschiedlichen Slaveeinheiten korrespondieren also unterschiedliche Adressbereiche. Durch die Hinterlegung der den Slaveeinheiten zugeordneten Adressbereiche in der Monitoreinheit können von der Monitoreinheit die Slaveeinheiten identifiziert und Pollingnachrichten und Unterbrechungsanforderungen den Slaveeinheiten zugeordnet werden.

Bei einer weiteren Ausgestaltung des erfindungsgemäßen Datenübertragungssystems ist die Monitoreinheit eingerichtet, nach dem Empfang einer Pollingnachricht, die von der Mastereinheit an eine ihr zugeordnete Slaveeinheit gerichtet ist, die Mastereinheit zum Unterbrechen aller von ihr ausgeführten Programme zu veranlassen. Ferner ist die Monitoreinheit eingerichtet, anschließend nach dem Empfang einer Unterbrechungsanforderung der Slaveeinheit die Pollingnachricht an das Bussystem weiterzuleiten. Beispielsweise wird die Mastereinheit von der Monitoreinheit durch ein Inaktivierungssignal zum Unterbrechen aller von ihr ausgeführten Programme veranlasst. Um das Inaktivierungssignal zu realisieren, kann beispielsweise vorteilhaft ein Ready-Signal verwendet werden, das die Werte Null und Eins annimmt, wobei der Wert Null als Inaktivierungssignal verwendet wird.

Bei der vorgenannten Ausgestaltung des erfindungsgemäßen Datenübertragungssystems wird die Mastereinheit also nach dem Senden einer an eine zugeordnete Slaveeinheit gerichteten Pollingnachricht durch die Monitoreinheit blockiert. Wenn diese Slaveeinheit dann eine Unterbrechungsanforderung sendet, wird diese Unterbrechungsanforderung von der Monitoreinheit nicht an die Mastereinheit gesendet, sondern als Trigger für das Weiterleiten der Pollingnachricht an das Bussystem verwendet. Diese Pollingnachricht wird von der Slaveeinheit dann positiv beantwortet, da die Slaveeinheit das Bereitstehen der von der Mastereinheit angefragten Daten durch die Unterbrechungsanforderung bereits signalisiert hat. Durch die positive Antwort der Slaveeinheit wird das Polling sofort beendet. Insgesamt wird also nur eine Pollingnachricht über das Bussystem gesendet und es wird von der Mastereinheit keine Unterbrechungsroutine auf eine Unterbrechungsanforderung hin ausgeführt. Insbesondere braucht in der Mastereinheit also keine Unterbrechungsroutine implementiert werden.

Bei einer alternativen Ausgestaltung des erfindungsgemäßen Datenübertragungssystems ist die Monitoreinheit eingerichtet, von der Mastereinheit an eine ihr zugeordnete Slaveeinheit gerichtete Pollingnachrichten negativ zu beantworten bis die Slaveeinheit eine Unterbrechungsanforderung sendet. Bei dieser Ausgestaltung des erfindungsgemäßen Datenübertragungssystems zeigt die Monitoreinheit der Mastereinheit also durch negatives Beantworten von Pollingnachrichten an, dass die Slaveeinheit keine Daten für die Mastereinheit bereitstellt, solange die Slaveeinheit keine Unterbrechungsanforderung sendet. Die Mastereinheit führt also reguläres Polling durch, dessen Pollingnachrichten jedoch nicht über das Bussytem an die Slaveeinheit gesendet werden, sondern von der Monitoreinheit negativ beantwortet werden, solange die Slaveeinheit keine Daten für die Mastereinheit bereitstellt.

Bei einer weiteren Ausgestaltung des erfindungsgemäßen Datenübertragungssystems ist die Monitoreinheit eingerichtet, jede Nachricht der Mastereinheit, die keine an eine ihr zugeordnete Slaveeinheit gerichtete Pollingnachricht ist, zu dem Bussystem weiterzuleiten und/oder jede über das Bussystem an die Mastereinheit gesendete Nachricht zu der Mastereinheit weiterzuleiten. Dadurch greift die Monitoreinheit vorteilhaft nur in die Pollingkommunikation der Mastereinheit ein, während sie anderweitig die Kommunikation zwischen der Mastereinheit und anderen Komponenten des Datenübertragungssystems nicht beeinflusst und in einem Transparentmodus (engl. Transparent Mode) arbeitet.

Bei dem erfindungsgemäßen Verfahren zur Datenübertragung in einem erfindungsgemäßen Datenübertragungssystem
- werden von der Monitoreinheit die von der Mastereinheit gesendeten Nachrichten und die von den der Mastereinheit zugeordneten Slaveeinheiten jeweils über eine Unterbrechungsanforderungsleitung gesendeten Unterbrechungsanforderungen empfangen, und
- Pollingnachrichten, die von der Mastereinheit an eine ihr zugeordnete Slaveeinheit gerichtet sind, werden von der Monitoreinheit nicht an das Bussystem weitergeleitet bis die Slaveeinheit eine Unterbrechungsanforderung über die Unterbrechungsanforderungsleitung sendet.

Bei einer Ausgestaltung des erfindungsgemäßen Verfahrens wird von der Monitoreinheit eine in einer Pollingnachricht enthaltene Adresse ausgewertet, um zu erkennen, ob die Pollingnachricht an eine der Mastereinheit zugeordnete Slaveeinheit gerichtet ist.

Bei einer weiteren Ausgestaltung des erfindungsgemäßen Verfahrens wird nach dem Empfang einer von der Mastereinheit an eine ihr zugeordnete Slaveeinheit gerichteten Pollingnachricht durch die Monitoreinheit die Mastereinheit von der Monitoreinheit zum Unterbrechen aller von ihr ausgeführten Programme veranlasst. Anschließend wird von der Monitoreinheit nach dem Empfang einer Unterbrechungsanforderung der Slaveeinheit die Pollingnachricht an das Bussystem weitergeleitet.

Bei einer zur vorgenannten Ausgestaltung alternativen Ausgestaltung des erfindungsgemäßen Verfahrens werden von der Monitoreinheit Pollingnachrichten, die von der Mastereinheit an eine ihr zugeordnete Slaveeinheit gerichtet sind, negativ beantwortet bis die Slaveeinheit eine Unterbrechungsanforderung über die Unterbrechungsanforderungsleitung sendet.

Bei einer weiteren Ausgestaltung des erfindungsgemäßen Verfahrens wird von der Monitoreinheit jede Nachricht der Mastereinheit, die keine an eine ihr zugeordnete Slaveeinheit gerichtete Pollingnachricht ist, zu dem Bussystem weitergeleitet und/oder jede über das Bussystem an die Mastereinheit gesendete Nachricht zu der Mastereinheit weitergeleitet.

Die Vorteile des erfindungsgemäßen Verfahrens entsprechen den oben genannten Vorteilen eines erfindungsgemäßen Datenübertragungssystems.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines Ausführungsbeispiels eines erfindungsgemäßen Datenübertragungssystems,
- FIG 2: ein Ablaufdiagramm eines Ausführungsbeispiels eines erfindungsgemäßen Verfahrens zur Datenübertragung.

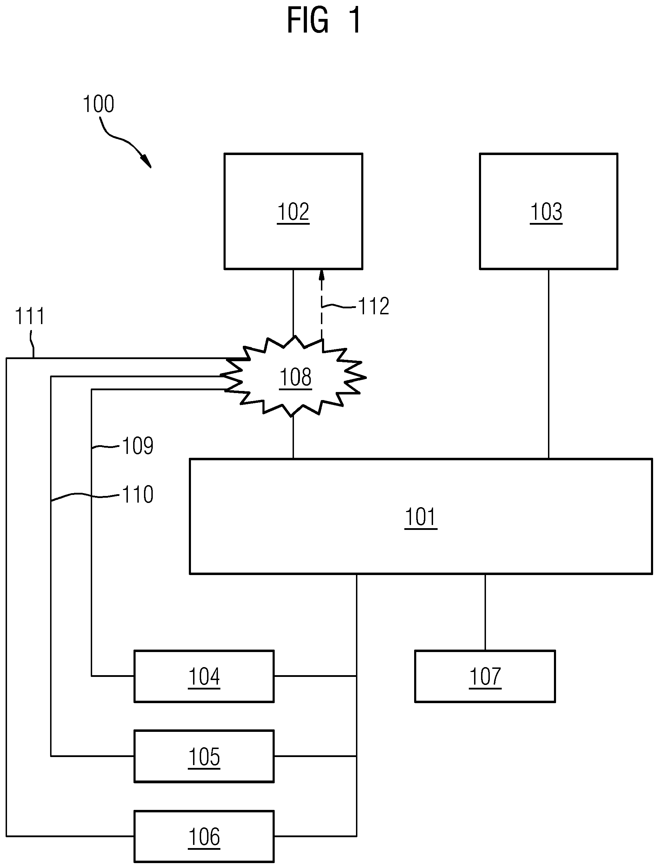

FIG 1 zeigt ein Blockdiagramm eines Ausführungsbeispiels eines erfindungsgemäßen Datenübertragungssystems 100. Das Datenübertragungssystem 100 umfasst ein Bussystem 101, Mastereinheiten 102, 103, Slaveeinheiten 104 bis 107 und eine Monitoreinheit 108 für die Mastereinheit 102.

Die Monitoreinheit 108 ist als eine Hardwarekomponente ausgebildet, die zwischen die Mastereinheit 102 und das Bussystem 101 geschaltet ist. Die Mastereinheit 102 ist also nicht wie in einem herkömmlichen Datenübertragungssystem direkt, sondern über die Monitoreinheit 108 mit dem Bussystem 101 verbunden. Das bedeutet, dass der Nachrichtenaustausch zwischen der Mastereinheit 102 und dem Bussystem 101 ausschließlich über die Monitoreinheit 108 erfolgen kann. Die andere Mastereinheit 103 ist in dem in FIG 1 gezeigten Ausführungsbeispiel direkt mit dem Bussystem 101 verbunden.

Die Slaveeinheiten 104 bis 107 sind mit dem Bussystem 101 verbunden. Die Slaveeinheiten 104 bis 106 sind ferner jeweils über eine Unterbrechungsanforderungsleitung 109 bis 111 mit der Monitoreinheit 108 verbunden.

Die Monitoreinheit 108 ist außerdem über eine Signalleitung 112 mit der Mastereinheit 102 verbunden. Über die Signalleitung 112 wird von der Monitoreinheit 108 beispielsweise ein Ready-Signal an die Mastereinheit 102 übertragen, das die Werte Null und Eins annehmen kann.

Jede Mastereinheit 102, 103 führt ein Kommunikationsprotokoll aus, gemäß dem sie Nachrichten versenden kann. Die Mastereinheit 102 ist insbesondere eingerichtet, Pollingnachrichten an jede der Slaveeinheiten 104 bis 106 zu versenden, um periodisch einen Slavezustand der jeweiligen Slaveeinheit 104 bis 106 abzufragen.

Die Slaveeinheiten 104 bis 106 sind unter anderem eingerichtet, über die jeweilige Unterbrechungsanforderungsleitung 109 bis 111 an die Mastereinheit 102 gerichtete Unterbrechungsanforderungen zu versenden und insofern der Mastereinheit 102 zugeordnet. In der Monitoreinheit 108 ist für jede dieser Slaveeinheiten 104 bis 106 ein der Slaveeinheit 104 bis 106 zugeordneter Adressbereich hinterlegt. Die Monitoreinheit 108 ist eingerichtet, anhand einer in einer Pollingnachricht enthaltenen Adresse zu erkennen, ob die Pollingnachricht an eine der Slaveeinheiten 104 bis 106 gerichtet ist und an welche Slaveeinheit 104 bis 106 die Pollingnachricht gerichtet ist. Den unterschiedlichen Slaveeinheiten 104 bis 106 korrespondierende Adressbereiche können unterschiedlich sein.

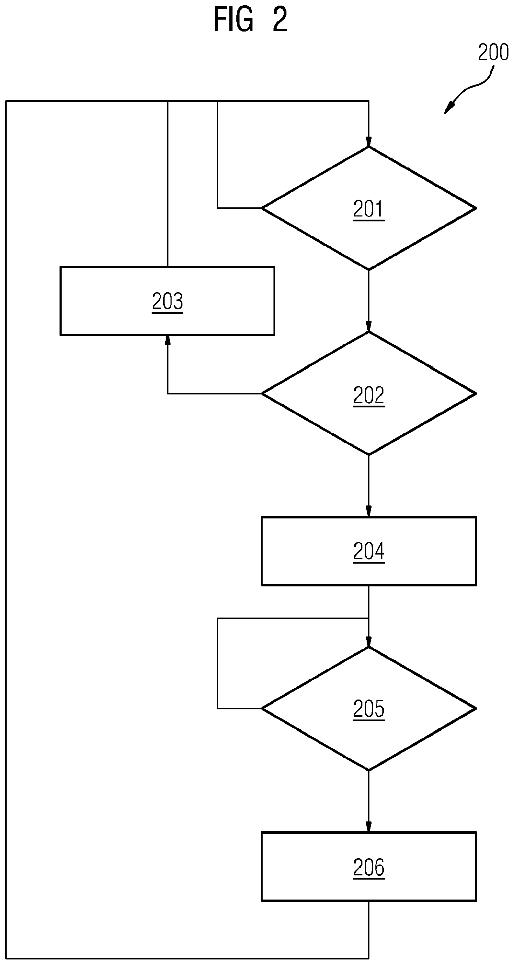

Die Monitoreinheit 108 ist ferner eingerichtet, ein erfindungsgemäßes Verfahren zur Datenübertragung in dem Datenübertragungssystem 100 auszuführen. Ein Ausführungsbeispiel des erfindungsgemäßen Verfahrens wird im Folgenden anhand von FIG 2 beschrieben.

FIG 2 zeigt ein Ablaufdiagramm 200 des Ausführungsbeispiels des erfindungsgemäßen Verfahrens mit Verfahrensschritten 201 bis 206 zur Datenübertragung in dem in FIG 1 gezeigten Datenübertragungssystem 100 und illustriert die Funktionsweise der Monitoreinheit 108.

In einem ersten Verfahrensschritt 201 wird von der Monitoreinheit 108 geprüft, ob von der Mastereinheit 102 eine Nachricht gesendet wurde. Wenn dies der Fall ist, wird die Nachricht von der Monitoreinheit 108 zwischengespeichert und das Verfahren wird mit einem zweiten Verfahrensschritt 202 fortgesetzt. Andernfalls wird der erste Verfahrensschritt 201 wiederholt.

In dem zweiten Verfahrensschritt 202 wird von der Monitoreinheit 108 geprüft, ob die von der Mastereinheit 102 gesendete Nachricht eine an eine der Slaveeinheiten 104 bis 106 gerichtete Pollingnachricht ist. Eine an eine der Slaveeinheiten 104 bis 106 gerichtete Pollingnachricht und die Slaveeinheit 104 bis 106, an die die Pollingnachricht gerichtet ist, erkennt die Monitoreinheit 108 an der Adresse, an die die Pollingnachricht adressiert ist.

Wenn die von der Mastereinheit 102 gesendete Nachricht keine an eine der Slaveeinheiten 104 bis 106 gerichtete Pollingnachricht ist, wird das Verfahren nach dem zweiten Verfahrensschritt 202 mit einem dritten Verfahrensschritt 203 fortgesetzt. Andernfalls wird das Verfahren nach dem zweiten Verfahrensschritt 202 mit einem vierten Verfahrensschritt 204 fortgesetzt.

In dem dritten Verfahrensschritt 203 wird die von der Mastereinheit 102 gesendete Nachricht von der Monitoreinheit 108 unverändert an das Bussystem 101 weitergeleitet. Nach dem dritten Verfahrensschritt 203 wird wieder der erste Verfahrensschritt 201 ausgeführt.

In dem vierten Verfahrensschritt 204 wird die Mastereinheit 102 durch die Monitoreinheit 108 zum Unterbrechen aller von ihr ausgeführten Programme veranlasst, beispielsweise indem ein über die Signalleitung 112 übertragenes Ready-Signal von der Monitoreinheit 108 auf Null gesetzt wird. Der Wert Null des Ready-Signals ist ein Inaktivierungssignal, das die Mastereinheit 102 zum Unterbrechen aller von ihr ausgeführten Programme veranlasst. Nach dem vierten Verfahrensschritt 204 wird das Verfahren mit einem fünften Verfahrensschritt 205 fortgesetzt.

In dem fünften Verfahrensschritt 205 wird von der Monitoreinheit 108 geprüft, ob diejenige Slaveeinheit 104 bis 106, an die die Pollingnachricht gerichtet war, über ihre Unterbrechungsanforderungsleitung 109 bis 111 eine Unterbrechungsanforderung geschickt hat. Wenn dies der Fall ist, wird das Verfahren mit einem sechsten Verfahrensschritt 206 fortgesetzt. Andernfalls wird der fünfte Verfahrensschritt 205 wiederholt.

In dem sechsten Verfahrensschritt 206 wird von der Monitoreinheit 108 die in dem ersten Verfahrensschritt 201 zwischengespeicherte Pollingnachricht an das Bussystem 101 weitergeleitet und die Monitoreinheit 108 geht in einen Transparentmodus. Das Ready-Signal für die Mastereinheit 102 wird nun von dem Bussystem 101 getriggert. Nach dem sechsten Verfahrensschritt 206 wird das Verfahren mit dem ersten Verfahrensschritt 201 fortgesetzt.

Von der Monitoreinheit 108 wird ferner jede über das Bussystem 101 an die Mastereinheit 102 gesendete Nachricht zu der Mastereinheit 102 weitergeleitet.

Das in FIG 1 gezeigte Datenübertragungssystem 100 unterscheidet sich von einem dazu korrespondierenden herkömmlichen Datenübertragungssystem durch die Monitoreinheit 108. Bei einem korrespondierenden herkömmlichen Datenübertragungssystem ist die Mastereinheit 102 direkt mit dem Bussystem 101 verbunden und die Unterbrechungsanforderungsleitungen 109 bis 111 sind mit der Mastereinheit 102 verbunden. Von der Mastereinheit 102 an eine der Slaveeinheiten 104 bis 106 gerichtete Pollingnachrichten werden in dem herkömmlichen Datenübertragungssystem daher periodisch über das Bussystem 101 an die jeweilige Slaveeinheit 104 bis 106 geleitet und blockieren dadurch den Zugriff auf eine der Slaveeinheiten 104 bis 106 über das Bussystem 101 für die andere Mastereinheit 103.

Durch die Monitoreinheit 108 wird also erreicht, dass das Bussystem 101 nicht durch an eine Slaveeinheit 104 bis 106 gerichtete periodische Pollingnachrichten der Mastereinheit 102 belastet wird. Wenn diese Slaveeinheit 104 bis 106 dann eine Unterbrechungsanforderung sendet, wird diese Unterbrechungsanforderung von der Monitoreinheit 108 nicht an die Mastereinheit 102 gesendet, sondern als Trigger für das Weiterleiten der zwischengespeicherten Pollingnachricht an das Bussystem 101 verwendet. Die Pollingnachricht wird von der Slaveeinheit 104 bis 106 positiv beantwortet, da sie nun die Daten für die Mastereinheit 102 bereithält. Mit der Lieferung dieser Daten an die Mastereinheit 102 wird auch das Ready-Signal für die Mastereinheit 102 durch das Bussystem 101 wieder auf Eins gesetzt, worauf die Mastereinheit 102 ihre unterbrochene Arbeit fortsetzt.

Insgesamt wird also nur eine Pollingnachricht über das Bussystem 101 gesendet und es wird von der Mastereinheit 102 keine Unterbrechungsroutine auf eine Unterbrechungsanforderung hin ausgeführt. Insbesondere braucht in der Mastereinheit 102 keine Unterbrechungsroutine implementiert werden. Ferner erfordert die Verwendung der Monitoreinheit 108 keine Anpassung der von der Mastereinheit 102 und den Slaveeinheiten 104 bis 106 ausgeführten Software, da von der Mastereinheit 102 das Polling und von den Slaveeinheiten 104 bis 106 das Versenden von Unterbrechungsanforderungen unverändert durchgeführt werden. Mit anderen Worten ist die Monitoreinheit 108 für diese Software transparent und kann daher problemlos und vorteilhaft in ein herkömmliches Datenübertragungssystem integriert werden, um dieses zu einem erfindungsgemäßen Datenübertragungssystem 100 umzurüsten.

Bei anderen Ausführungsbeispielen eines erfindungsgemäßen Datenübertragungssystems 100 kann für mehr als eine Mastereinheit 102, 103 jeweils eine Monitoreinheit 108 vorgesehen sein, die analog zu dem anhand von den Figuren 1 und 2 beschriebenen Ausführungsbeispiel ausgebildet ist und mit Slaveeinheiten 104 bis 107 jeweils über eine Unterbrechungsanforderungsleitung 109 bis 111 verbunden ist.

Ferner kann in alternativen Ausführungsbeispielen eines erfindungsgemäßen Datenübertragungssystems 100 und des erfindungsgemäßen Verfahrens vorgesehen sein, dass über die Signalleitung 112 nicht ein Ready-Signal übertragen wird, sondern ein Valid-Signal, das die Werte Null und Eins annehmen kann. Der Wert Null des Valid-Signals signalisiert der Mastereinheit 102, dass keine von ihr mit einer Pollingnachricht angefragten Daten einer Slaveeinheiten 104 bis 106 vorliegen. Bei dem erfindungsgemäßen Verfahren wird in diesem Fall die Mastereinheit 102 nach dem Senden einer Pollingnachricht, die an eine Slaveeinheit 104 bis 106 gerichtet ist, nicht durch ein Ready-Signal blockiert, sondern die von der Mastereinheit 102 gesendeten Pollingnachrichten werden von der Monitoreinheit 108 durch den Wert Null des Valid-Signals negativ beantwortet bis die Slaveeinheit 104 bis 106 eine Unterbrechungsanforderung über ihre Unterbrechungsanforderungsleitung 109 bis 111 sendet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie sie in den Ansprüchen 1 und 10 definiert ist zu verlassen.

## Patentansprüche

1. Datenübertragungssystem (100), umfassend
- ein Bussystem (101),
- eine Mastereinheit (102), die zum Versenden von Nachrichten eingerichtet ist,
- wenigstens eine der Mastereinheit (102) zugeordnete und mit dem Bussystem (101) verbundene Slaveeinheit (104 bis 106), die eingerichtet ist, über eine Unterbrechungsanforderungsleitung (109 bis 111) an die Mastereinheit (102) gerichtete Unterbrechungsanforderungen zu versenden,
- eine als Hardwarekomponente ausgebildete Monitoreinheit (108), die zwischen die Mastereinheit (102) und das Bussystem (101) geschaltet ist, mit der Unterbrechungsanforderungsleitung (109 bis 111) jeder der Mastereinheit (102) zugeordneten Slaveeinheit (104 bis 106) verbunden ist , das Datenübertragungssystem (100) **dadurch gekennzeichnet, dass** die Monitoringeinheit (108) eingerichtet ist,
- die von der Mastereinheit (102) gesendeten Nachrichten und die von jeder der Mastereinheit (102) zugeordneten Slaveeinheit (104 bis 106) über eine Unterbrechungsanforderungsleitung (109 bis 111) gesendeten Unterbrechungsanforderungen zu empfangen, und
- von der Mastereinheit (102) an eine ihr zugeordnete Slaveeinheit (104 bis 106) gerichtete Pollingnachrichten nicht an das Bussystem (101) weiterzuleiten und das periodische Versenden von Pollingnachrichten der Mastereinheit (102) an die wenigstens eine der Mastereinheit (102) zugeordnete Slaveeinheit (104 bis 106) über das Bussystem (101) zu unterbinden, bis die wenigstens eine Slaveeinheit (104 bis 106) eine Unterbrechungsanforderung über die Unterbrechungsanforderungsleitung (109 bis 111) sendet.

2. Datenübertragungssystem (100) nach Anspruch 1, wobei in der Monitoreinheit (108) für jede der Mastereinheit (102) zugeordnete Slaveeinheit (104 bis 106) ein der Slaveeinheit (104 bis 106) zugeordneter Adressbereich hinterlegt ist.

3. Datenübertragungssystem (100) nach Anspruch 2, wobei die Monitoreinheit (108) eingerichtet ist, anhand einer in einer Pollingnachricht enthaltenen Adresse zu erkennen, ob die Pollingnachricht an eine der Mastereinheit (102) zugeordnete Slaveeinheit (104 bis 106) gerichtet ist.

4. Datenübertragungssystem (100) nach einem der Ansprüche 1 bis 3, wobei die Monitoreinheit (108) eingerichtet ist, nach dem Empfang einer Pollingnachricht, die von der Mastereinheit (102) an eine ihr zugeordnete Slaveeinheit (104 bis 106) gerichtet ist, die Mastereinheit (102) zum Unterbrechen aller von ihr ausgeführten Programme zu veranlassen und anschließend nach dem Empfang einer Unterbrechungsanforderung der Slaveeinheit (104 bis 106) die Pollingnachricht an das Bussystem (101) weiterzuleiten.

5. Datenübertragungssystem (100) nach Anspruch 4, wobei die Monitoreinheit (108) eingerichtet ist, die Mastereinheit (102) durch ein Inaktivierungssignal zum Unterbrechen aller von ihr ausgeführten Programme zu veranlassen.

6. Datenübertragungssystem (100) nach Anspruch 4 oder 5, wobei die Monitoreinheit (108) eingerichtet ist, die Mastereinheit (102) nach dem Empfang der Unterbrechungsanforderung der Slaveeinheit (104 bis 106) durch ein Aktivierungssignal zum Fortsetzen der unterbrochenen Programme zu veranlassen.

7. Datenübertragungssystem (100) nach einem der Ansprüche 1 bis 3, wobei die Monitoreinheit (108) eingerichtet ist, von der Mastereinheit (102) an eine ihr zugeordnete Slaveeinheit (104 bis 106) gerichtete Pollingnachrichten negativ zu beantworten bis die Slaveeinheit (104 bis 106) eine Unterbrechungsanforderung über die Unterbrechungsanforderungsleitung (109 bis 111) sendet.

8. Datenübertragungssystem (100) nach einem der vorhergehenden Ansprüche, wobei die Monitoreinheit (108) eingerichtet ist, jede Nachricht der Mastereinheit (102), die keine an eine ihr zugeordnete Slaveeinheit (104 bis 106) gerichtete Pollingnachricht ist, zu dem Bussystem (101) weiterzuleiten.

9. Datenübertragungssystem (100) nach einem der vorhergehenden Ansprüche, wobei die Monitoreinheit (108) eingerichtet ist, jede über das Bussystem (101) an die Mastereinheit (102) gesendete Nachricht zu der Mastereinheit (102) weiterzuleiten.

10. Verfahren zur Datenübertragung in einem gemäß einem der vorhergehenden Ansprüche ausgebildeten Datenübertragungssystem (100), **dadurch gekennzeichnet, dass** von der Monitoreinheit (108)
- die von der Mastereinheit (102) gesendeten Nachrichten und die von jeder der Mastereinheit (102) zugeordneten Slaveeinheit (104 bis 106) über eine Unterbrechungsanforderungsleitung (109 bis 111) gesendeten Unterbrechungsanforderungen empfangen werden, und
- Pollingnachrichten, die von der Mastereinheit (102) an eine ihr zugeordnete Slaveeinheit (104 bis 106) gerichtet sind, nicht an das Bussystem (101) weitergeleitet werden bis die Slaveeinheit (104 bis 106) eine Unterbrechungsanforderung über die Unterbrechungsanforderungsleitung (109 bis 111) sendet.

11. Verfahren nach Anspruch 10, wobei von der Monitoreinheit (108) eine in einer Pollingnachricht enthaltene Adresse ausgewertet wird, um zu erkennen, ob die Pollingnachricht an eine der Mastereinheit (102) zugeordnete Slaveeinheit (104 bis 106) gerichtet ist.

12. Verfahren nach Anspruch 10 oder 11, wobei nach dem Empfang einer von der Mastereinheit (102) an eine ihr zugeordnete Slaveeinheit (104 bis 106) gerichteten Pollingnachricht durch die Monitoreinheit (108) die Mastereinheit (102) von der Monitoreinheit (108) zum Unterbrechen aller von ihr ausgeführten Programme veranlasst wird und anschließend von der Monitoreinheit (108) nach dem Empfang einer Unterbrechungsanforderung der Slaveeinheit (104 bis 106) die Pollingnachricht an das Bussystem (101) weitergeleitet wird.

13. Verfahren nach Anspruch 10 oder 11, wobei von der Monitoreinheit (108) Pollingnachrichten, die von der Mastereinheit (102) an eine ihr zugeordnete Slaveeinheit (104 bis 106) gerichtet sind, negativ beantwortet werden bis die Slaveeinheit (104 bis 106) eine Unterbrechungsanforderung über die Unterbrechungsanforderungsleitung (109 bis 111) sendet.

14. Verfahren nach einem der Ansprüche 10 bis 13, wobei von der Monitoreinheit (108) jede Nachricht der Mastereinheit (102), die keine an eine ihr zugeordnete Slaveeinheit (104 bis 106) gerichtete Pollingnachricht ist, zu dem Bussystem (101) weitergeleitet wird.

15. Verfahren nach einem der Ansprüche 10 bis 14, wobei von der Monitoreinheit (108) jede über das Bussystem (101) an die Mastereinheit (102) gesendete Nachricht zu der Mastereinheit (102) weitergeleitet wird.

## Claims

1. Data transfer system (100) comprising
- a bus system (101),
- a master unit (102) which is configured to send messages,
- at least one slave unit (104 to 106) which is allocated to the master unit (102) and connected to the bus system (101), and is configured to send interrupt requests directed to the master unit (102) via an interrupt request line (109 to 111),
- a monitor unit (108) which is designed as a hardware component, said monitor unit (108) being connected between the master unit (102) and the bus system (101), being connected to the interrupt request line (109 to 111) of each slave unit (104 to 106) that is allocated to the master unit (102), the data transfer system (100), **characterised in that** the monitoring unit (108) is configured
- to receive the messages sent from the master unit (102) and the interrupt requests sent via an interrupt request line (109 to 111) from each slave unit (104 to 106) that is allocated to the master unit (102), and
- to not forward to the bus system (101) polling messages which are directed from the master unit (102) to a slave unit (104 to 106) that is allocated thereto, and to prevent the periodic sending of polling messages from the master unit (102) via the bus system (101) to the at least one slave unit (104 to 106) allocated to the master unit (102), until the at least one slave unit (104 to 106) sends an interrupt request via the interrupt request line (109 to 111).

2. Data transfer system (100) according to claim 1, wherein an address range allocated to the slave unit (104 to 106) is stored in the monitor unit (108) for each slave unit (104 to 106) allocated to the master unit (102).

3. Data transfer system (100) according to claim 2, wherein the monitor unit (108) is configured to identify, on the basis of an address contained in a polling message, whether the polling message is directed to a slave unit (104 to 106) that is allocated to the master unit (102).

4. Data transfer system (100) according to one of claims 1 to 3, wherein the monitor unit (108) is configured, following the receipt of a polling message which is directed from the master unit (102) to a slave unit (104 to 106) that is allocated thereto, to instruct the master unit (102) to interrupt all programs it is executing and then, following the receipt of an interrupt request from the slave unit (104 to 106), to forward the polling message to the bus system (101).

5. Data transfer system (100) according to claim 4, wherein the monitor unit (108) is configured to instruct the master unit (102) by means of a deactivation signal to interrupt all programs it is executing.

6. Data transfer system (100) according to claim 4 or 5, wherein the monitor unit (108) is configured, following the receipt of the interrupt request from the slave unit (104 to 106), to instruct the master unit (102) by means of an activation signal to continue the interrupted programs.

7. Data transfer system (100) according to one of claims 1 to 3, wherein the monitor unit (108) is configured to negatively answer polling messages which are directed from the master unit (102) to a slave unit (104 to 106) that is allocated thereto, until the slave unit (104 to 106) sends an interrupt request via the interrupt request line (109 to 111).

8. Data transfer system (100) according to one of the preceding claims, wherein the monitor unit (108) is configured to forward to the bus system (101) every message from the master unit (102) which is not a polling message directed to a slave unit (104 to 106) that is allocated thereto.

9. Data transfer system (100) according to one of the preceding claims, wherein the monitor unit (108) is configured to forward to the master unit (102) every message that is sent via the bus system (101) to the master unit (102).

10. Method for transferring data in a data transfer system (100) which is designed according to one of the preceding claims, **characterised in that** the monitor unit (108)
- receives the messages that are sent from the master unit (102) and the interrupt requests that are sent via an interrupt request line (109 to 111) from every slave unit (104 to 106) that is allocated to the master unit (102), and
- does not forward to the bus system (101) polling messages which are directed from the master unit (102) to a slave unit (104 to 106) that is allocated thereto, until the slave unit (104 to 106) sends an interrupt request via the interrupt request line (109 to 111).

11. Method according to claim 10, wherein the monitor unit (108) analyses an address contained in a polling message, in order to identify whether the polling message is directed to a slave unit (104 to 106) that is allocated to the master unit (102) .

12. Method according to claim 10 or 11, wherein following the receipt by the monitor unit (108) of a polling message which is directed from the master unit (102) to a slave unit (104 to 106) that is allocated thereto, the monitor unit (108) instructs the master unit (102) to interrupt all programs it is executing and, following the receipt of an interrupt request from the slave unit (104 to 106), the monitor unit (108) then forwards the polling message to the bus system (101) .

13. Method according to claim 10 or 11, wherein polling messages which are directed from the master unit (102) to a slave unit (104 to 106) that is allocated thereto are answered negatively by the monitor unit (108) until the slave unit (104 to 106) sends an interrupt request via the interrupt request line (109 to 111).

14. Method according to one of claims 10 to 13, wherein the monitor unit (108) forwards to the bus system (101) every message from the master unit (102) which is not a polling message directed to a slave unit (104 to 106) that is allocated thereto.

15. Method according to one of claims 10 to 14, wherein the monitor unit (108) forwards to the master unit (102) every message that is sent via the bus system (101) to the master unit (102) .

## Revendications

1. Système (100) de transfert de données, comprenant :
- un système (101) de bus,
- une unité (102) maître, qui est agencée pour l'envoi de messages,
- au moins une unité (104 à 106) esclave, affectée à l'unité (102) maître et reliée au système (101) de bus, qui est agencée pour envoyer, par une ligne (109 à 111) de demande d'interruption, des demandes d'interruption dirigées sur l'unité (102) maître,
- une unité (108) de contrôle constituée sous la forme d'un composant matériel, qui est montée entre l'unité (102) maître et le système (101) de bus, est reliée par la ligne (109 à 111) de demande d'interruption à chaque unité (104 à 106) esclave affectée à l'unité (102) maître, le système (100) de transfert de données étant **caractérisé en ce que** l'unité (108) de contrôle est agencée,
- pour recevoir les messages envoyés par l'unité (102) maître et les demandes d'interruption envoyées par une ligne (109 à 111) de demande d'interruption de chaque unité (104 à 106) esclave affectée à l'unité (102) maître, et
- pour ne pas acheminer au système (101) de bus des messages de polling dirigés de l'unité (102) maître à une unité (104 à 106) esclave, qui lui est affectée, et pour supprimer, par le système (101) de bus, l'envoi périodique de messages de polling de l'unité (102) maître à la au moins une unité (104 à 106) esclave affectée à l'unité (102) maître, jusqu'à ce que la au moins une unité (104 à 106) esclave envoie une demande d'interruption par la ligne (109 à 111) de demande d'interruption.

2. Système (100) de transfert de données suivant la revendication 1, dans lequel l'unité (108) de contrôle met, pour chaque unité (104 à 106) esclave affectée à l'unité (102) maître, en mémoire une zone d'adresse affectée à l'unité (104 à 106) esclave.

3. Système (100) de transfert de données suivant la revendication 2, dans lequel l'unité (108) de contrôle est agencée pour, à l'aide d'une adresse contenue dans le message de polling, détecter si le message de polling est dirigé sur une unité (104 à 106) esclave affectée à l'unité (102) maître.

4. Système (100) de transfert de données suivant la revendication 1 à 3, dans lequel l'unité (108) de contrôle est agencée pour, après la réception d'un message de polling, qui est dirigé de l'unité (102) maître à une unité (104 à 106) esclave, qui lui est affectée, que l'unité (102) maître provoque l'interruption de tous les programmes par elle réalisés et ensuite, après la réception d'une demande d'interruption de l'unité (104 à 106) esclave, achemine le message de polling au système (101) de bus.

5. Système (100) de transfert de données suivant la revendication 4, dans lequel l'unité (108) de contrôle est agencée pour que l'unité (102) maître provoque, par un signal d'inactivation, l'interruption de tous les programmes par elle réalisés.

6. Système (100) de transfert de données suivant la revendication 4 ou 5, dans lequel l'unité (108) de contrôle est agencée pour que l'unité (102) maître, après la réception de la demande d'interruption de l'unité (104 à 106) esclave provoque, par un signal d'activation, la continuation des programmes interrompus.

7. Système (100) de transfert de données suivant l'une des revendications 1 à 3, dans lequel l'unité (108) de contrôle est agencée pour répondre négativement à des messages de polling envoyés de l'unité (102) à une unité (104 à 106) esclave, qui lui est affectée, jusqu'à ce que l'unité (104 à 106) esclave envoie une demande d'interruption par la ligne (109 à 111) de demande d'interruption.

8. Système (100) de transfert de données suivant l'une des revendications précédentes, dans lequel l'unité (108) de contrôle est agencée pour acheminer au système (101) de bus chaque message de l'unité (102) maître, qui n'est pas un message de polling, dirigé sur une unité (104 à 106) esclave, qui lui est affectée.

9. Système (100) de transfert de données suivant l'une des revendications précédentes, dans lequel l'unité (108) de contrôle est agencée pour acheminer à l'unité (102) maître chaque message envoyé à l'unité (102) maître par le système (101) de bus.

10. Procédé de transfert de données dans un système (100) de transfert de données constitué suivant l'une des revendications précédentes, **caractérisé en ce que**,
par l'unité (108) de contrôle,
- les messages envoyés par l'unité (102) maître et les demandes d'interruption envoyées par une ligne (109 à 111) de demande d'interruption de chaque unité (104 à 106) esclave affectée à l'unité (102) maître sont reçus, et
- les messages de polling, qui sont dirigés de l'unité (102) maître à une unité (104 à 106) esclave, qui lui est affectée, ne sont pas acheminés au système (101) de bus, jusqu'à ce que l'unité (104 à 106) esclave envoie une demande d'interruption par la ligne (109 à 111) de demande d'interruption.

11. Procédé suivant la revendication 6, dans lequel, par l'unité (108) de contrôle, une adresse contenue dans un message de polling est évaluée pour détecter si le message de polling est dirigé sur une unité (104 à 106) esclave affectée à l'unité (102) maître.

12. Procédé suivant la revendication 10 ou 11, dans lequel, après la réception d'un message de polling dirigé de l'unité (102) maître à une unité (104 à 106) esclave, qui lui est affectée, il est provoqué, par l'unité (108) de contrôle, que l'unité (102) maître interrompt, par l'unité (108) de contrôle, tous les programmes par elle réalisés et ensuite, par l'unité (108) de contrôle, après la réception d'une demande d'interruption de l'unité (104 à 106) esclave, le message de polling est acheminé au système (101) de bus.

13. Procédé suivant la revendication 10 ou 11, dans lequel, par l'unité (108) de contrôle, il est répondu négativement à des messages de polling, qui sont dirigés de l'unité (102) maître à une unité (104 à 106) esclave, qui lui est affectée, jusqu'à ce que l'unité (104 à 106) esclave envoie une demande d'interruption par la ligne (109 à 111) d'interruption.

14. Procédé suivant l'une des revendications 10 à 13, dans lequel, par l'unité (108) de contrôle, chaque message de l'unité (102) maître, qui n'est pas un message de polling dirigé sur une unité (104 à 106) esclave, qui lui est affectée, est acheminé au système (101) de bus.

15. Procédé suivant l'une des revendications 10 à 14, dans lequel, par l'unité (108) de contrôle, chaque message, envoyé à l'unité (102) maître par le système (101) de bus, est acheminé à l'unité (102) maître.
